(19) Europäisches Patentamt / European Patent Office / Office européen des brevets

(11) **EP 3 221 825 B1**

(12) **FASCICULE DE BREVET EUROPEEN**

(45) Date de publication et mention
de la délivrance du brevet:
**24.10.2018   Bulletin 2018/43**

(21) Numéro de dépôt: **15804895.9**

(22) Date de dépôt: **17.11.2015**

(51) Int Cl.:
*G06Q 10/04* (2012.01)        *G06Q 50/30* (2012.01)
*H02J 7/00* (2006.01)        *B60L 11/18* (2006.01)
*G06Q 50/06* (2012.01)

(86) Numéro de dépôt international:
**PCT/FR2015/053106**

(87) Numéro de publication internationale:
**WO 2016/079419 (26.05.2016 Gazette 2016/21)**

(54) **PROCÉDÉ ET SYSTÈME DE GESTION DE LA CHARGE D'UN PARC DE BATTERIES**

VERFAHREN UND SYSTEM ZUR VERWALTUNG DER LADUNG EINER SAMMLUNG VON
BATTERIEN

METHOD AND SYSTEM FOR THE MANAGEMENT OF THE CHARGE OF A COLLECTION OF
BATTERIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **20.11.2014   FR 1461252**

(43) Date de publication de la demande:
**27.09.2017   Bulletin 2017/39**

(73) Titulaire: **Commissariat à l'énergie atomique
et aux énergies alternatives
75015 Paris (FR)**

(72) Inventeurs:
• **GUILLOU, Hervé
  75015 Paris (FR)**
• **LESPINATS, Sylvain
  73100 Aix-les-Bains (FR)**

(74) Mandataire: **Cabinet Beaumont
4, Place Robert Schuman
B.P. 1529
38025 Grenoble Cedex 1 (FR)**

(56) Documents cités:
**EP-A1- 2 509 181        EP-A1- 2 775 586
WO-A2-2013/014238        FR-A1- 2 952 247
FR-A1- 2 995 149        KR-A- 20110 129 518
US-A1- 2013 046 411        US-A1- 2014 058 595**

EP 3 221 825 B1

**Description**

La présente demande de brevet revendique la priorité de la demande de brevet français FR14/61252 à laquelle il est fait référence.

Domaine

La présente demande concerne la gestion de la charge d'un parc de batteries électriques. Les modes de réalisation décrits seront détaillés en relation avec un exemple d'application au domaine des véhicules électriques. On comprendra toutefois que les modes de réalisation décrits s'appliquent plus généralement à tous types de dispositifs comportant une ou plusieurs batteries nécessitant, pour leur recharge, d'être reliées à une borne de recharge externe au dispositif.

Exposé de l'art antérieur

Un véhicule électrique comporte une ou plusieurs batteries qui nécessitent, pour leur recharge, d'être reliées à une borne de recharge extérieure au véhicule. La borne de recharge est alimentée par une ou plusieurs sources d'énergie électrique, et est adaptée à être connectée électriquement au véhicule pour fournir à la batterie du véhicule un courant de recharge. A titre d'exemple, la borne de recharge peut être reliée à des panneaux photovoltaïques adaptés à générer une énergie électrique qui peut être utilisée pour la recharge de la batterie. La borne de recharge peut en outre être reliée à une ou plusieurs sources d'énergie électrique complémentaires, par exemple un réseau traditionnel de distribution d'électricité, de façon à pouvoir fournir de l'électricité même lorsque les panneaux photovoltaïques n'en produisent pas ou pas suffisamment (par exemple la nuit).

Dans leurs versions les plus simples, les systèmes de recharge existants sont configurés pour, lorsqu'un utilisateur connecte son véhicule à une borne de recharge, initier immédiatement la recharge de la batterie du véhicule, et, lorsque la batterie atteint sa pleine charge, interrompre la fourniture du courant de recharge.

Des systèmes de recharge plus élaborés ont été proposés dans la demande de brevet EP2775586 et par la demanderesse dans les demandes de brevet WO2011051144, WO2013014238 et WO2014037356. Dans ces systèmes, il est notamment prévu de transmettre au système de recharge, pour chaque véhicule à charger, la quantité d'énergie souhaitée à injecter dans la batterie, et l'instant où cette quantité d'énergie doit avoir été injectée dans la batterie (correspondant à l'instant prévu de déconnexion de la batterie du système de recharge). Ces données peuvent être saisies par l'utilisateur (par exemple via une interface utilisateur associée à la borne de recharge), ou être communiquées automatiquement par le véhicule lui-même (par exemple par l'intermédiaire d'une liaison de communication entre le véhicule et la borne de recharge), par exemple en fonction de données d'itinéraire préalablement saisies par l'utilisateur. Le système tient alors compte du besoin exprimé par l'utilisateur ou le véhicule, ainsi que de données prévisionnelles de fourniture d'énergie par la ou les sources d'énergie, pour planifier les recharges des différents véhicules, par exemple de façon à minimiser le coût et/ou l'impact environnemental de chaque recharge.

Dans de tels systèmes, une étape clé, qui correspond à l'étape E1 du procédé de la figure 6 de la demande de brevet WO2013014238 susmentionnée, est la détermination, pour chaque batterie $B_i$ connectée au système de recharge à un instant donné, d'une consigne de quantité d'énergie $E_i$ à injecter dans la batterie $B_i$ par le système de recharge avant l'instant prévu de déconnexion de la batterie, i étant un entier allant de 1 à N et N étant un entier supérieur à 1 correspondant au nombre de batterie présentes dans le parc de batteries à recharger. Une fois déterminées, les différentes consignes $E_i$ sont fournies aux algorithmes de planification des recharges, qui établissent un planning de recharge pour les différentes batteries, et définissent notamment, pour chaque batterie $B_i$, la ou les périodes d'injection de la charge $E_i$ dans la batterie, ainsi que la puissance de charge à délivrer pendant ces périodes dans le cas où les bornes de charge sont réglables en puissance, et, éventuellement, les sources d'énergie à exploiter pour fournir cette charge. La charge des différentes batteries est commandée par le système de recharge conformément au planning établi par les algorithmes de planification. Les opérations de détermination des consignes $E_i$ et de planification des recharges peuvent être répétées pour mettre à jour le planning des recharges, par exemple périodiquement, ou à chaque fois qu'un évènement spécifique se produit, par exemple une arrivée ou un départ de véhicule. Plus particulièrement, dans le document WO2013014238 susmentionné, la consigne de quantité d'énergie $E_i$ à injecter dans chaque batterie $B_i$ est déterminée à partir du besoin exprimé par l'utilisateur ou par le véhicule lors de sa connexion au système de recharge, et à partir des prévisions de production d'énergie par les différentes sources du système. En effet, dans le cas où la production d'énergie est insuffisante, la consigne $E_i$ d'énergie à injecter dans une batterie $B_i$ peut être inférieure au besoin exprimé lors de la connexion du véhicule au système de recharge.

Un point de faiblesse des procédés et systèmes de gestion de charge existants est lié aux imprécisions et aléas qui affectent la détermination des consignes $E_i$ d'énergie à injecter dans les différentes batteries par le système de recharge. Ces imprécisions et aléas peuvent se traduire par des choix inappropriés de stratégie de recharge par les algorithmes de planification, pouvant entrainer des dysfonctionnements ou une diminution des performances du système.

Résumé

Un objet d'un mode de réalisation est de prévoir une solution de gestion de la charge d'un parc de batteries électriques, palliant tout ou partie des inconvénients des solutions connues.

Un autre objet d'un mode de réalisation est de prévoir un procédé de détermination des consignes $E_i$ d'énergie à injecter dans les différentes batteries du parc, qui soit plus robuste que les procédés existants.

Un autre objet d'un mode de réalisation est de prévoir un procédé permettant de déterminer des consignes $E_i$ qui soient plus proches des besoins effectifs des utilisateurs qu'avec les procédés existants.

Un autre objet d'un mode de réalisation est de prévoir un procédé de détermination des consignes $E_i$ qui permettent de maximiser, pour chaque batterie, la probabilité que la consigne $E_i$ affectée à la batterie soit supérieure ou égale au besoin énergétique effectif de la batterie pour atteindre sa pleine charge, en tenant compte de prévisions de production d'électricité par la ou les sources d'alimentation du système de recharge.

Un autre objet d'un mode de réalisation est de prévoir un procédé de détermination des consignes $E_i$ qui soit compatible avec un système de recharge dans lequel, lors de la connexion d'une batterie au système de recharge, aucune information quant au besoin énergétique de la batterie n'est exprimée par l'utilisateur ou par le dispositif à charger.

Ainsi, un mode de réalisation prévoit un procédé de gestion, au moyen d'une unité de traitement, de la charge d'un parc de batteries connectées à des bornes de recharge d'un système de recharge, comprenant les étapes suivantes : a) déterminer la quantité totale d'énergie qui peut être délivrée par le système de recharge pendant une période de recharge ; b) déterminer, pour chaque batterie, une loi de probabilité du besoin énergétique effectif de la batterie ; et c) déterminer, pour chaque batterie, une consigne d'énergie à injecter dans la batterie, les consignes étant déterminées en tenant compte des lois de probabilité de façon à maximiser, pour chaque batterie, la probabilité que la consigne affectée à la batterie soit supérieure ou égale au besoin énergétique effectif de la batterie, et de façon que la somme des consignes soit inférieure ou égale la quantité totale d'énergie pouvant être délivrée par le système de recharge pendant ladite période.

Selon un mode de réalisation, à l'étape b), pour chaque batterie, la loi de probabilité du besoin énergétique effectif de la batterie est déterminée en tenant compte de données statistiques concernant des recharges antérieures de la batterie par le système de recharge.

Selon un mode de réalisation, à l'étape c), les consignes sont déterminées de façon que la probabilité que la consigne attribuée à une batterie soit supérieure ou égale à son besoin énergétique effectif soit la même pour toutes les batteries.

Selon un mode de réalisation, à l'étape c), les consignes sont déterminées par recherche dichotomique de ladite probabilité.

Selon un mode de réalisation, la recherche dichotomique comprend les étapes suivantes : c1) affectation d'une valeur arbitraire à la probabilité ; c2) détermination, pour chaque batterie, à partir de la loi de probabilité de la batterie, de la consigne correspondant à la probabilité ; c3) comparaison de la somme des consignes à la quantité totale d'énergie, et mise à jour de la valeur de la probabilité en tenant compte du résultat de la comparaison ; et réitération des étapes c2) et c3) jusqu'à ce que la somme des consignes soit comprise dans la plage allant de 0,9 fois à une fois la quantité totale d'énergie.

Selon un mode de réalisation, à l'étape c), les consignes sont déterminées de façon que, pour chaque batterie, la probabilité que la consigne attribuée à la batterie soit supérieure ou égale au besoin énergétique effectif de la batterie tienne compte d'ordres de priorité affectés aux différentes batteries.

Selon un mode de réalisation, à l'étape c), les consignes sont déterminées par recherche dichotomique.

Selon un mode de réalisation, la recherche dichotomique comprend les étapes suivantes : c1') affectation d'une valeur arbitraire de probabilité à une variable ; c2') détermination, pour chaque batterie, à partir de la loi de probabilité de la batterie, de la consigne correspondant à la valeur de probabilité de la variable divisée par l'ordre de priorité attribué à la batterie ; c3') comparaison de la somme des consignes à la quantité totale d'énergie, et mise à jour de la valeur de probabilité de la variable en tenant compte du résultat de la comparaison ; et réitération des étapes c2') et c3') jusqu'à ce que la somme des consignes soit comprise dans la plage allant de 0,9 fois à une fois la quantité totale d'énergie.

Selon un mode de réalisation, à l'étape c), les consignes sont déterminées de façon que, pour chaque batterie, la probabilité que la consigne attribuée à la batterie soit supérieure ou égale au besoin énergétique effectif de la batterie ne soit pas inférieure à un seuil affecté à la batterie.

Un autre mode de réalisation prévoit un système de gestion de la charge d'un parc de batteries connectées à des bornes de recharge d'un système de recharge, comprenant une unité de traitement configurée pour mettre en oeuvre un procédé de gestion de charge du type susmentionné.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente schématiquement un exemple d'un mode de réalisation d'un système de recharge de batteries ;

la figure 2 illustre schématiquement, sous forme de blocs, un exemple d'un mode de réalisation d'un procédé de détermination de consignes $E_i$ d'énergie à injecter dans les différentes batteries $B_i$ d'un parc de batteries à recharger ;

les figures 3A, 3B, 3C et 3D représentent respectivement quatre exemples de lois de probabilité du besoin énergétique effectif d'une batterie d'un parc de batteries à recharger ;

les figures 4, 5, 6 et 7 illustrent schématiquement le fonctionnement du procédé de la figure 2 ; et

la figure 8 illustre schématiquement une variante de réalisation de procédé de la figure 2.

Description détaillée

Par souci de clarté, de mêmes éléments ont été désignés par de mêmes références aux différentes figures. De plus, seuls les éléments utiles à la compréhension de l'invention ont été décrits. En particulier, la façon dont sont exploitées, par des algorithmes de planification de recharge, les consignes $E_i$ d'énergie à injecter dans les différentes batteries $B_i$ à recharger, n'a pas été détaillée, le procédé proposé de détermination des consignes $E_i$ étant compatible avec tous les algorithmes de planification existants. En outre, la réalisation de la charge des batteries proprement dite, conformément au planning de recharge établi, n'a pas été détaillée, les modes de réalisation décrits étant compatibles avec la plupart des systèmes de recharge existants.

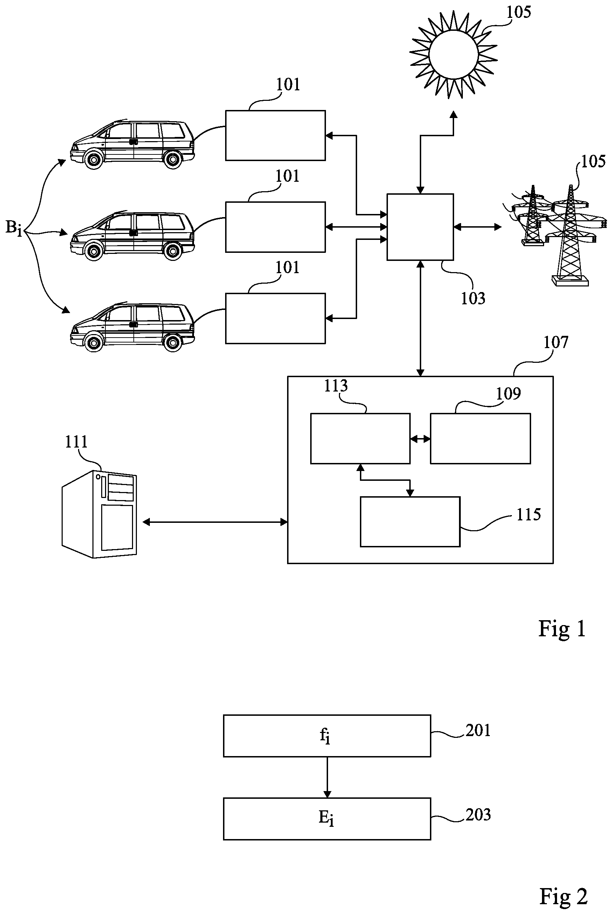

La figure 1 illustre un exemple d'un mode de réalisation d'un système de charge de batteries électriques. Ce système comprend plusieurs bornes de recharge 101, et un dispositif 103 d'alimentation et de contrôle des bornes de recharge 101. Les bornes 101 sont reliées au dispositif 103, qui est lui-même relié à une ou plusieurs sources d'énergie électrique 105, par exemple une ou plusieurs sources intermittentes telles que des panneaux photovoltaïques ou des éoliennes, et, optionnellement, un réseau de distribution électrique traditionnel pour pallier les éventuelles insuffisances des sources intermittentes. Chaque borne de recharge 101 est destinée à être connectée à une batterie $B_i$ à recharger (i.e. à un véhicule électrique dans cet exemple représenté). Le dispositif 103 est adapté à commander individuellement la fourniture d'un courant de charge et l'interruption du courant de charge par chacune des bornes 101, et, optionnellement, la puissance délivrée par chacune des bornes 101, et, optionnellement, la ou les sources d'énergie utilisées pour produire le courant de charge délivré par chacune des bornes 101.

Le système de charge de la figure 1 comprend en outre une unité de traitement 107, comprenant des moyens logiciels et matériels pour le pilotage du dispositif 103, de façon à commander la mise en oeuvre d'un procédé de recharge des batteries connectées aux bornes de recharge. L'unité de traitement 107 comprend l'intelligence du système de recharge, sous la forme de tout type de calculateur ou processeur.

Dans cet exemple, l'unité 107 comprend notamment un module de prédiction 109, configuré pour mettre en oeuvre un calcul d'estimation de la quantité d'énergie qui peut être fournie au système de recharge par les différentes sources d'énergie 105, notamment les sources intermittentes, pendant une période de recharge donnée. Le module de prédiction 109 peut en outre optionnellement être configuré pour mettre en oeuvre un calcul d'estimation de l'évolution du prix de l'électricité provenant des sources externes, par exemple le réseau. Le module de prédiction 109 peut en outre optionnellement être configuré pour mettre en oeuvre un calcul d'estimation des arrivées et/ou départs des batteries à recharger (i.e. des véhicules électriques dans cet exemple). Le module de prédiction 109 peut fonctionner de manière locale et autonome, et/ou, optionnellement, à partir d'informations communiquées par un serveur distant 111 relié à l'unité de traitement 107 par tout moyen de communication adapté (par exemple une liaison filaire ou une liaison sans fil). A titre d'exemple non limitatif, l'unité de traitement 107 peut être configurée pour recevoir du serveur 111 des données de prévision météorologique, qui peuvent notamment être exploitées par le module de prédiction 109 pour estimer la quantité d'énergie susceptible d'être fournie par la ou les sources intermittentes.

L'unité de traitement 107 comprend en outre un module de gestion de charge 113, qui met en oeuvre des fonctions et algorithmes permettant de déterminer quand et comment chaque batterie $B_i$ connectée au système doit être rechargée. Le module de gestion 113 est notamment configuré pour mettre en oeuvre des algorithmes de planification des recharges du type mentionné ci-dessus. Le module 113 est en outre configuré pour mettre en oeuvre un procédé, qui sera détaillé ci-après, de détermination, pour chaque batterie $B_i$ connectée au système, d'une consigne $E_i$ d'énergie à injecter dans la batterie, cette consigne étant destinée à être fournie aux algorithmes de planification.

Dans l'exemple représenté, l'unité de traitement 107 comprend en outre un module de base de données locale 115, configuré pour mémoriser l'historique de diverses données relatives au système de recharge et aux utilisateurs du système de recharge. A titre d'exemple, le module 115 est configuré pour mémoriser l'historique des besoins énergétiques exprimés, pour chaque véhicule utilisateur, lors de la connexion du véhicule au système de recharge, ainsi que l'historique des besoins énergétiques effectivement constatés par le système de recharge pour chaque véhicule utilisateur. Pour la tenue de la base de données 115, le système de recharge peut être équipé de moyens, non représentés, d'identification des véhicules utilisateurs.

Parmi les causes susceptibles d'affecter les performances des dispositifs de gestion de charge existants, les inventeurs ont notamment identifié les imprécisions des besoins énergétiques exprimés (par le véhicule ou par l'utilisateur) lors de la connexion des véhicules au système de recharge, liés par exemple à une mauvaise estimation de l'état de charge effectif de la batterie. Il en résulte que, souvent, les consignes $E_i$ d'énergie à injecter, fournies aux algorithmes d'optimisation, ne correspondent pas aux besoins énergétiques réels des batteries.

Selon un aspect d'un mode de réalisation, on prévoit de déterminer les consignes $E_i$ d'énergie à injecter dans chaque batterie connectée au système de recharge, en tenant compte des données d'historique d'utilisation, et/ou données statistiques, mémorisées dans le module de base de données 115, selon un procédé qui va être détaillé ci-après, de façon à générer des consignes $E_i$ au plus proche des besoins énergétiques effectifs des utilisateurs. Un avantage de ce procédé est qu'il permet d'améliorer de façon significative les performances du système de recharge, et notamment son rendement énergétique et/ou sa capacité à répondre aux besoins énergétiques réels des batteries. En outre, ce procédé est compatible avec des systèmes de recharge dans lesquels, lors de la connexion d'une batterie au système de recharge, aucune information quant au besoin énergétique de la batterie n'est exprimée par l'utilisateur ou par le dispositif à charger.

La figure 2 illustre de façon très schématique un exemple d'un mode de réalisation d'un procédé de détermination des consignes $E_i$ d'énergie à injecter dans les différentes batteries $B_i$ connectées au système de recharge.

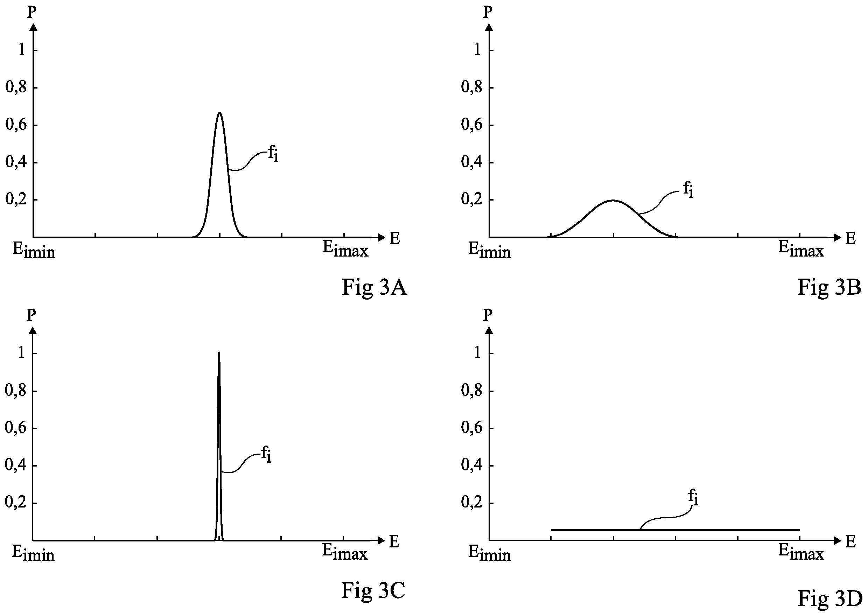

Selon un aspect des modes de réalisation décrits, on prévoit, lors d'une étape 201, illustrée plus en détail par les figures 3A, 3B, 3C et 3D, de déterminer, pour chaque batterie $B_i$ connectée au système de recharge, une loi de probabilité $f_i$ du besoin énergétique effectif de la batterie (par exemple pour atteindre son niveau de pleine charge), en tenant compte, le cas échéant, des données statistiques disponibles pour la batterie considérée. L'étape 201 est par exemple mise en oeuvre par le module de gestion 113 du système de recharge de la figure 1.

Pour chaque batterie $B_i$ connectée au système de recharge, une borne inférieure $E_{imin}$ et une borne supérieure $E_{imax}$ du besoin énergétique effectif de la batterie peuvent d'abord être déterminées par le système de recharge. A titre d'exemple, la borne inférieure $E_{imin}$ peut être nulle, ce qui correspond au cas où la batterie est entièrement chargée, et la borne supérieure $E_{imax}$ peut être égale à la pleine capacité de la batterie, ce qui correspond au cas où la batterie est entièrement déchargée. A titre de variante, dans le cas où le système de recharge dispose de données statistiques à propos de la batterie $B_i$, les bornes $E_{imin}$ et $E_{imax}$ peuvent être déterminées en tenant compte de ces données. A titre d'exemple non limitatif, les bornes $E_{imin}$ et $E_{imax}$ peuvent correspondre respectivement au plus petit et au plus grand besoin énergétique effectivement constaté par le système de recharge pour la batterie $B_i$ lors des différentes recharges de la batterie $B_i$ par le système. La loi de probabilité $f_i$ du besoin énergétique effectif de la batterie entre les bornes $E_{imin}$ et $E_{imax}$ est ensuite déterminée par le module de gestion 113.

Les figures 3A à 3D sont des diagrammes illustrant de façon schématique, respectivement pour quatre cas d'usage distincts, quatre exemples de lois de probabilité $f_i$ du besoin énergétique effectif d'une batterie $B_i$. Plus particulièrement, chacun des diagrammes des figures 3A à 3D représente l'évolution de la probabilité P (en ordonnée), comprise dans la plage allant de 0 à 1, que le besoin énergétique effectif de la batterie soit égal à une valeur E particulière (en abscisse), comprise dans la plage allant de $E_{imin}$ à $E_{imax}$.

La figure 3A correspond à un cas d'usage dans lequel le besoin énergétique de la batterie $B_i$ est exprimé par l'utilisateur ou par le véhicule lui-même lors de la connexion du véhicule au système de recharge, et dans lequel le système de recharge dispose de données statistiques à propos du véhicule utilisateur. Dans ce cas, l'incertitude quant au besoin énergétique effectif du véhicule provient essentiellement du manque de précision des données communiquées par l'utilisateur ou par le véhicule. La loi de probabilité $f_i$ est déterminée par le module de gestion 113 en tenant compte du besoin exprimé et des données statistiques concernant le véhicule. La distribution de la loi de probabilité $f_i$ peut être relativement restreinte, notamment si le besoin énergétique est communiqué par le véhicule lui-même.

La figure 3B correspond à un cas d'usage dans lequel le besoin énergétique de la batterie $B_i$ n'est pas exprimé lors de la connexion du véhicule au système de recharge, mais dans lequel le système de recharge dispose de données statistiques à propos du véhicule utilisateur. Dans ce cas la loi de probabilité $f_i$ est déterminée par le module de gestion 113 en tenant compte uniquement des données statistiques concernant le véhicule. La distribution de la loi de probabilité $f_i$ peut alors être relativement étendue.

La figure 3C correspond à un cas d'usage dans lequel le besoin énergétique de la batterie $B_i$ est exprimé par l'utilisateur ou par le véhicule lui-même lors de la connexion du véhicule au système de recharge, mais dans lequel le système de recharge ne dispose d'aucunes données statistiques à propos du véhicule utilisateur. Dans ce cas, la loi de probabilité $f_i$ affectée par le module de gestion 113 à la batterie $B_i$ est par exemple une loi de type Dirac, ou loi uniforme discrète, ou une loi normale arbitraire, centrée sur la valeur du besoin énergétique exprimé lors de la connexion du véhicule au système de recharge. En d'autres termes, l'incertitude entre le besoin exprimé et le besoin effectif est considéré comme nulle ou est fixée de façon arbitraire par le module de gestion 113.

La figure 3D correspond à un cas d'usage dans lequel le besoin énergétique de la batterie $B_i$ n'est pas

exprimé lors de la connexion du véhicule au système de recharge, et dans lequel le système de recharge ne dispose d'aucunes données statistiques à propos du véhicule utilisateur. Dans ce cas, la loi de probabilité $f_i$ affectée par le module de gestion 113 à la batterie $B_i$ est par exemple une loi uniforme continue, c'est-à-dire que le module 113 considérera que la probabilité que le besoin énergétique effectif de la batterie $B_i$ soit égal à une valeur E particulière comprise entre les bornes $E_{imin}$ et $E_{imax}$ est la même pour toutes les valeurs comprises entre les bornes $E_{imin}$ et $E_{imax}$.

A titre d'exemple, lors de l'étape 201, pour chaque batterie $B_i$, la loi de probabilité $f_i$ du besoin énergétique de la batterie peut être déterminée à partir d'un modèle sélectionné parmi quatre modèles du type décrits en relation avec les figures 3A à 3D selon qu'un besoin énergétique est exprimé ou non et selon que des données statistiques sont disponibles ou non, ce modèle pouvant, le cas échéant, être adapté pour tenir compte du besoin exprimé et/ou des données statistiques disponibles.

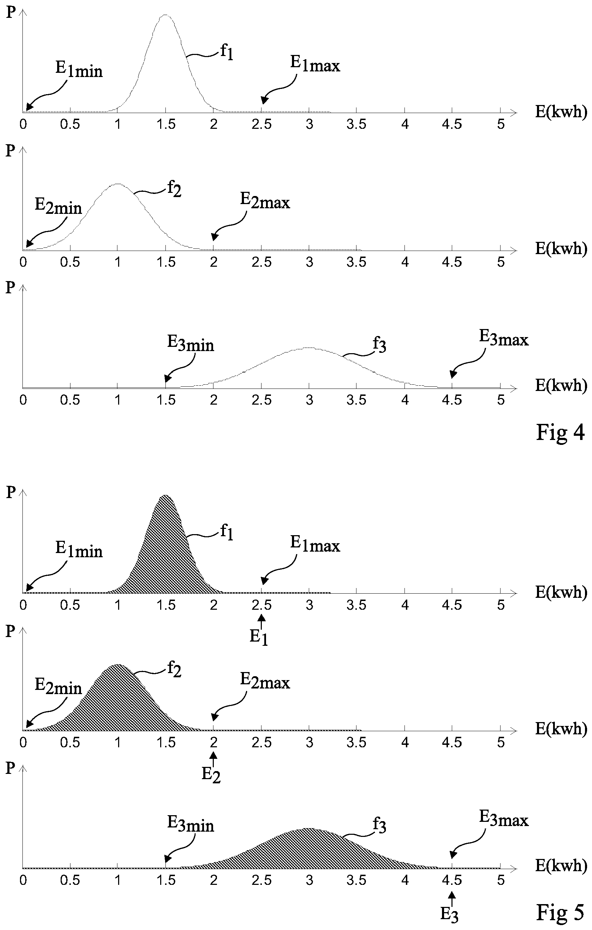

Après l'étape 201, on prévoit, lors d'une étape 203 (figure 2) détaillée ci-après et illustrée par les figures 4, 5, 6 et 7, de déterminer, pour chaque batterie $B_i$ connectée au système de recharge, une consigne $E_i$ d'énergie à injecter dans la batterie, en tenant compte d'une prévision de la quantité $E_{source}$ d'énergie disponible sur l'ensemble des sources pendant la période de recharge considérée, et des lois de probabilité $f_i$ des différentes batteries, de façon à maximiser, pour chaque batterie $B_i$, la probabilité que la consigne $E_i$ soit supérieure ou égale au besoin énergétique effectif de la batterie, par exemple pour atteindre son niveau de pleine charge. L'étape 203 est par exemple mise en oeuvre par le module de gestion 113 du système de recharge de la figure 1. L'estimation de la quantité d'énergie $E_{source}$ produite par l'ensemble des sources 105 pendant la période de recharge considérée peut être fournie par le module de prédiction 109.

Pour illustrer le procédé de la figure 2, on considère à titre d'exemple non limitatif un système de recharge du type décrit en relation avec la figure 1, auquel sont connectées trois batteries $B_1$, $B_2$ et $B_3$ à recharger (N=3).

La figure 4 représente les lois de probabilité $f_1$, $f_2$ et $f_3$ des besoins énergétiques effectifs des batteries $B_1$, $B_2$ et $B_3$ respectivement, telles que déterminées par le système de recharge à l'étape 201. A titre d'exemple, les batteries $B_1$, $B_2$ et $B_3$ sont identiques et présentent chacune une capacité totale de 5 kWh. Comme cela apparaît sur la figure 4, les batteries $B_1$, $B_2$ et $B_3$ ont des lois de probabilité de besoin énergétique différentes. Dans l'exemple représenté, les bornes inférieures $E_{imin}$ et $E_{imax}$ des batteries $B_1$, $B_2$ et $B_3$ sont fixées comme suit, par exemple en tenant compte des données statistiques disponibles pour les trois batteries : $E_{1min}$ = $E_{2min}$ = 0 kWh ; $E_{3min}$ = 1,5 kWh ; $E_{1max}$ = 2,5 kWh, $E_{2max}$ = 2 kWh ; et $E_{3max}$ = 4,5 kWh.

Lors de l'étape 203, le module de gestion 113 compare la quantité totale $E_{source}$ d'énergie disponible, prédite par le module de prédiction 109, à la somme des bornes supérieures $E_{imax}$ de besoin énergétique des batteries $B_i$ connectées au système de recharge, et/ou à la somme des bornes inférieures $E_{imin}$ de besoin énergétique des batteries $B_i$. Les consignes $E_i$ sont alors déterminées par des méthodes distinctes, détaillées ci-après, selon que la ressource est :

- clairement excédentaire ($E_{source} \geq \Sigma_i E_{imax}$) ;
- incertaine ($E_{source} < \Sigma_i E_{imax}$ et $E_{source} \geq \Sigma_i E_{imin}$) ; ou
- clairement insuffisante ($E_{source} < \Sigma_i E_{imin}$).

Les figures 5, 6 et 7 illustrent le résultat du procédé de détermination des consignes $E_i$ dans ces trois cas de figure. Plus particulièrement, chacune des figures 5, 6 et 7 reprend les courbes de loi de probabilité $f_1$, $f_2$ et $f_3$ de la figure 4, et représente en outre, sur chaque courbe $f_i$, une surface hachurée correspondant à l'intégrale, de $E_{imin}$ à $E_i$, de la loi de probabilité $f_i$, c'est-à-dire à la probabilité que la consigne $E_i$ soit supérieure ou égale au besoin énergétique effectif de la batterie.

Si la quantité $E_{source}$ est supérieure ou égale à la somme des bornes supérieures $E_{imax}$ (ressource excédentaire - cas illustré par la figure 5), le module de gestion 113 affecte à chaque batterie $B_i$ une consigne $E_i$ d'énergie à injecter dans la batterie, égale à la borne supérieure $E_{imax}$ du besoin énergétique de la batterie. Ce choix des consignes $E_i$ = $E_{imax}$ permet de minimiser le risque que le besoin énergétique réel d'une batterie ne soit pas satisfait. Pour chaque batterie $B_i$, la probabilité que le besoin énergétique réel de la batterie soit satisfait par la consigne $E_i$ est alors sensiblement égale à 1.

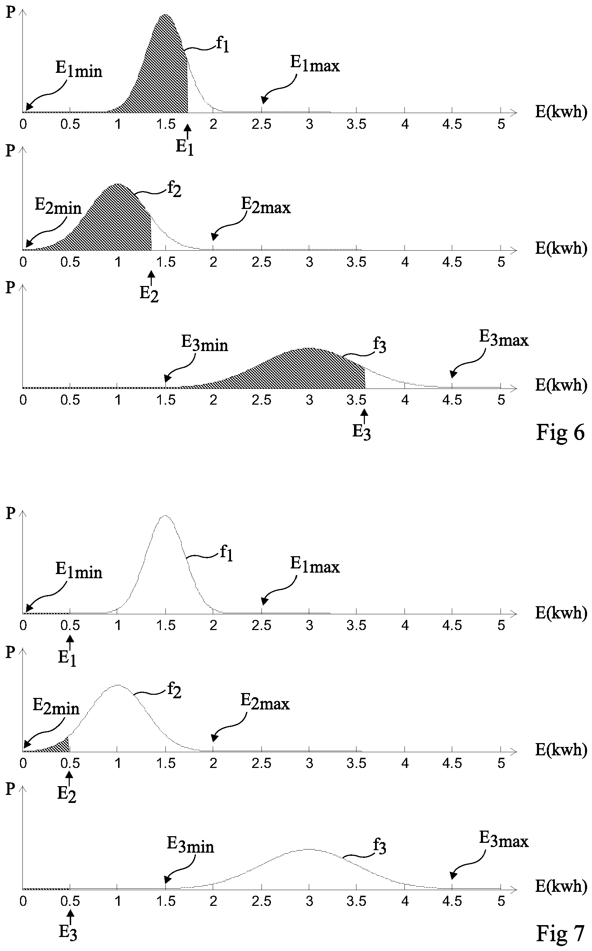

Si la quantité $E_{source}$ est inférieure à la somme des bornes supérieures $E_{imax}$ mais est supérieure ou égale à la somme des bornes inférieure $E_{imin}$ (ressource incertaine - cas illustré par la figure 6), les consignes $E_i$ sont déterminées, dans cet exemple, de façon que la probabilité $\alpha$ pour que la consigne $E_i$ affectée à une batterie $B_i$ soit supérieure ou égale au besoin énergétique effectif de la batterie $B_i$, soit sensiblement la même pour toutes les batteries $B_i$ connectées au système de recharge, et soit la plus élevée possible.

La valeur $\alpha$ peut être déterminée par dichotomie.

A titre d'exemple, la valeur $\alpha$ est d'abord fixée arbitrairement à une valeur comprise entre 0 et 1, par exemple $\alpha$ = 0,5.

Le module de gestion détermine alors pour chaque batterie $B_i$, à partir de la loi de probabilité $f_i$ du besoin énergétique de la batterie, la valeur $E_i$ telle que :

$$\alpha = \int_{E_{imin}}^{E_i} f_i(x)dx \qquad (1)$$

Une fois les N valeurs $E_i$ déterminées, le module de gestion 113 compare la somme des valeurs $E_i$ à la

valeur $E_{source}$. Si la somme des valeurs $E_i$ est supérieure à la valeur $E_{source}$, la valeur $\alpha$ est diminuée, par exemple divisée par 2. Si la somme des valeurs $E_i$ est inférieure à la valeur $E_{source}$, la valeur $\alpha$ est augmentée, par exemple fixée à $\alpha = 1 - \alpha/2$.

L'étape de détermination du jeu de valeurs $E_i$ respectant l'équation (1) susmentionnée est alors réitérée, et ainsi de suite jusqu'à obtenir un jeu de valeurs $E_i$ tel que la somme des valeurs $E_i$ approche sensiblement, sans la dépasser, la valeur $E_{source}$, par exemple soit comprise dans la plage allant de $0{,}9*E_{source}$ à $E_{source}$, et de préférence dans la plage allant de $0{,}99*E_{source}$ à $E_{source}$.

Dans l'exemple de la figure 6, les consignes $E_1$, $E_2$ et $E_3$ déterminées par le procédé susmentionné sont respectivement égales à 1,2 kWh, 1,2 kWh et 3,2 kWh, et la valeur a, correspondant aux surfaces hachurées de la figure 6, est approximativement égale à 0,74, ce qui signifie que pour chaque batterie $B_i$, la probabilité que la consigne $E_i$ soit supérieure ou égale au besoin énergétique réel de la batterie est de 74%.

Si la quantité $E_{source}$ est inférieure à la somme des bornes inférieures $E_{imin}$ (ressource insuffisantes - cas illustré par la figure 7), la probabilité que le besoin énergétique effectif de toutes les batteries $B_i$ soit satisfait est nulle. Le module de gestion 113 affecte alors à chaque batterie $B_i$ une consigne $E_i$ arbitraire telle que la somme des consignes $E_i$ soit égale à la valeur $E_{source}$. A titre d'exemple, le module 113 affecte à toutes les batteries $B_i$ la même consigne $E_i = E_{source}/N$. La probabilité que la consigne $E_i$ affectée à une batterie $B_i$ soit supérieure ou égale au besoin énergétique effectif de la batterie n'est alors pas nécessairement la même pour toutes les batteries, et peut être nulle pour certaines batteries et non nulle pour d'autre, comme cela est illustré sur la figure 7.

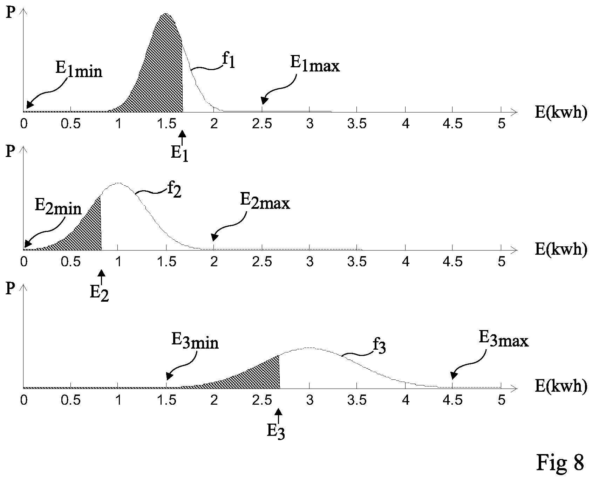

La figure 8 illustre une variante de réalisation du procédé susmentionné de détermination des consignes $E_i$. Dans cette variante, il est prévu d'affecter à chaque utilisateur du système de recharge un rang de priorité $k_i$ destiné, lorsque la ressource énergétique est incertaine ou insuffisante, à permettre de prioriser certains utilisateurs par rapport à d'autres. La figure 8 illustre le résultat du procédé de détermination des consignes $E_i$ dans le cas où la ressource est incertaine, c'est-à-dire où la quantité $E_{source}$ est inférieure à la somme des bornes supérieures $E_{imax}$ mais est supérieure ou égale à la somme des bornes inférieure $E_{imin}$. Plus particulièrement, la figure 8 reprend les courbes de loi de probabilité $f_1$, $f_2$ et $f_3$ de la figure 4, et représente en outre, sur chaque courbe $f_i$, une surface hachurée correspondant à l'intégrale, de $E_{imin}$ à $E_i$, de la loi de probabilité $f_i$, c'est-à-dire à la probabilité que la consigne $E_i$ soit supérieure ou égale au besoin énergétique effectif de la batterie.

A titre d'exemple, le rang de priorité associé à chaque batterie $B_i$ est un entier compris dans la plage allant de 1 à $P_{min}$, où $P_{min}$ est un entier supérieur à 1, et où $k_i = P_{min}$ correspond au rang de priorité le plus faible, et $k_i = 1$ correspond au rang de priorité le plus élevée.

Les consignes $E_i$ sont déterminées, comme dans l'exemple décrit en relation avec la figure 6, c'est-à-dire en tenant compte de la valeur $E_{source}$, et de façon à maximiser, pour chaque batterie $B_i$, la probabilité $\alpha_i$ pour que la consigne $E_i$ affectée à la batterie soit supérieure ou égale au besoin énergétique effectif de la batterie. Toutefois, à la différence de l'exemple décrit en relation avec la figure 6, les probabilités $\alpha_i$ associées aux différentes batteries tiennent compte du rang de priorité $k_i$ de la batterie, et ne sont donc pas nécessairement les mêmes pour toutes les batteries.

Les valeurs $\alpha_i$ peuvent être déterminées par dichotomie. Pour cela, une variable intermédiaire $\alpha'$ peut être fixée arbitrairement à une valeur comprise entre 0 et 1, par exemple $\alpha' = 0{,}5$.

Le module de gestion détermine alors pour chaque batterie $B_i$, à partir de la loi de probabilité $f_i$ du besoin énergétique de la batterie, la valeur $E_i$ telle que :

$$\frac{\alpha\prime}{k_i} = \int_{E_{imin}}^{E_i} f_i(x)\,dx \qquad (2)$$

Une fois les N valeurs $E_i$ déterminées, le module de gestion 113 compare la somme des valeurs $E_i$ à la valeur $E_{source}$. Si la somme des valeurs $E_i$ est supérieure à la valeur $E_{source}$, la valeur $\alpha'$ est diminuée, par exemple divisée par 2. Si la somme des valeurs $E_i$ est inférieure à la valeur $E_{source}$, la valeur $\alpha$ est augmentée, par exemple fixée à $\alpha' = 1 - \alpha'/2$.

L'étape de détermination du jeu de valeurs $E_i$ respectant l'équation (2) susmentionnée est alors réitérée, et ainsi de suite jusqu'à obtenir un jeu de valeurs $E_i$ tel que la somme des valeurs $E_i$ approche sensiblement, sans la dépasser, la valeur $E_{source}$, par exemple soit comprise dans la plage allant de $0{,}9*E_{source}$ à $E_{source}$, et de préférence dans la plage allant de $0{,}99*E_{source}$ à $E_{source}$.

Dans l'exemple de la figure 8, la batterie $B_1$ est affectée du rang de priorité $k_1=1$, et les batteries $B_2$ et $B_3$ sont affectées du rang de priorité $k_2=k_3=3$. Ceci signifie que la probabilité $\alpha_1$ pour que la consigne $E_1$ soit supérieure ou égale au besoin effectif de la batterie $B_1$ est trois fois supérieure à la probabilité $\alpha_2$, respectivement $\alpha_3$, pour que la consigne $E_2$, respectivement $E_3$, soit supérieure ou égale au besoin effectif de la batterie $B_2$, respectivement $B_3$. Dans l'exemple représenté, les consignes $E_1$, $E_2$ et $E_3$ déterminées sont respectivement égales à 1,69 kWh, 0,83 kWh et 2,7 kWh, et les valeurs $\alpha_1$, $\alpha_2$ et $\alpha_3$ sont respectivement égales à 81%, 27% et 27%.

A titre de variante, une contrainte supplémentaire peut être ajoutée lors de la détermination des consignes $E_i$ selon le procédé décrit en relation avec la figure 8, à savoir l'affectation, à chaque batterie $B_i$, d'une valeur minimale $\alpha_{imin}$ de probabilité de satisfaction du besoin énergétique effectif de la batterie. Ainsi, le procédé décrit en relation avec la figure 8 peut être modifié pour garantir que, pour chaque batterie $B_i$, la valeur $\alpha_i$ déterminée par le procédé soit supérieur ou égale à la valeur $\alpha_{imin}$ affec-

tée à la batterie (dans la mesure où la quantité d'énergie $E_{source}$ fournie au système de recharge le permet) .

**Revendications**

1. Procédé de gestion, au moyen d'une unité de traitement (107), de la charge d'un parc de batteries ($B_i$) connectées à des bornes de recharge (101) d'un système de recharge, comprenant les étapes suivantes :

   a) déterminer la quantité totale d'énergie ($E_{source}$) qui peut être délivrée par le système de recharge pendant une période de recharge ;
   b) déterminer, pour chaque batterie (Bi), une loi de probabilité ($f_i$) du besoin énergétique effectif de la batterie, en tenant compte de données statistiques concernant des recharges antérieures de la batterie ($B_i$) par le système de recharge ;
   c) déterminer, pour chaque batterie ($B_i$), une consigne ($E_i$) d'énergie à injecter dans la batterie ($B_i$), les consignes ($E_i$) étant déterminées en tenant compte des lois de probabilité ($f_i$) de façon à maximiser, pour chaque batterie ($B_i$), la probabilité que la consigne ($E_i$) affectée à la batterie soit supérieure ou égale au besoin énergétique effectif de la batterie, et de façon que la somme des consignes ($E_i$) soit inférieure ou égale à la quantité totale d'énergie ($E_{source}$) pouvant être délivrée par le système de recharge pendant ladite période ;
   d) établir un planning de recharge des batteries ($B_i$) tenant compte desdites consignes ($E_i$) ; et
   e) commander la charge des batteries ($B_i$) conformément au planning établi,

   dans lequel, à l'étape c), les consignes ($E_i$) sont déterminées par recherche dichotomique de la probabilité.

2. Procédé selon la revendication 1, dans lequel, à l'étape c), les consignes ($E_i$) sont déterminées de façon que la probabilité (a) que la consigne ($E_i$) attribuée à une batterie ($B_i$) soit supérieure ou égale à son besoin énergétique effectif soit la même pour toutes les batteries ($B_i$).

3. Procédé selon la revendication 1 ou 2, dans lequel ladite recherche dichotomique comprend les étapes suivantes :

   c1) affectation d'une valeur arbitraire à ladite probabilité ($\alpha$) ;
   c2) détermination, pour chaque batterie (Bi), à partir de la loi de probabilité ($f_i$) de la batterie, de la consigne ($E_i$) correspondant à ladite probabilité ($\alpha$) ;

   c3) comparaison de la somme des consignes ($E_i$) à la quantité totale d'énergie ($E_{source}$), et mise à jour de la valeur de ladite probabilité ($\alpha$) en tenant compte du résultat de la comparaison ; et

   réitération des étapes c2) et c3) jusqu'à ce que la somme des consignes ($E_i$) soit comprise dans la plage allant de 0,9 fois à une fois la quantité totale d'énergie ($E_{source}$).

4. Procédé selon la revendication 1, dans lequel, à l'étape c), les consignes ($E_i$) sont déterminées de façon que, pour chaque batterie ($B_i$), la probabilité ($\alpha_i$) que la consigne attribuée à la batterie soit supérieure ou égale au besoin énergétique effectif de la batterie tienne compte d'ordres de priorité ($k_i$) affectés aux différentes batteries.

5. Procédé selon la revendication 4, dans lequel ladite recherche dichotomique comprend les étapes suivantes :

   c1') affectation d'une valeur arbitraire de probabilité à une variable ($\alpha'$) ;
   c2') détermination, pour chaque batterie ($B_i$), à partir de la loi de probabilité ($f_i$) de la batterie, de la consigne ($E_i$) correspondant à la valeur de probabilité de ladite variable ($\alpha'$) divisée par l'ordre de priorité ($k_i$) attribué à la batterie ($B_i$) ;
   c3') comparaison de la somme des consignes ($E_i$) à la quantité totale d'énergie ($E_{source}$), et mise à jour de la valeur de probabilité de ladite variable ($\alpha'$) en tenant compte du résultat de la comparaison ; et

   réitération des étapes c2') et c3') jusqu'à ce que la somme des consignes ($E_i$) soit comprise dans la plage allant de 0,9 fois à une fois la quantité totale d'énergie ($E_{source}$).

6. Procédé selon la revendication 4 ou 5, dans lequel, à l'étape c), les consignes ($E_i$) sont déterminées de façon que, pour chaque batterie ($B_i$), la probabilité ($\alpha_i$) que la consigne attribuée à la batterie soit supérieure ou égale au besoin énergétique effectif de la batterie ne soit pas inférieure à un seuil ($\alpha_{imin}$) affecté à la batterie.

7. Système de gestion de la charge d'un parc de batteries ($B_i$) connectées à des bornes de recharge (101) d'un système de recharge, comprenant une unité de traitement (107) configurée pour mettre en oeuvre un procédé de gestion de charge selon l'une quelconque des revendications 1 à 6.

**Patentansprüche**

1. Verfahren zur Verwaltung mittels einer Verarbeitungseinheit (107) der Ladung einer Sammlung von Batterien (B<sub>i</sub>), die mit Ladestationen (101) eines Ladesystems verbunden sind, das die folgenden Schritte aufweist:

   a) Bestimmen einer Gesamtenergiemenge ($E_{source}$), die durch das Ladesystem für eine Ladezeitperiode geliefert werden kann;
   b) Bestimmen für jede Batterie ($B_i$) einer Wahrscheinlichkeitsverteilung ($f_i$) des effektiven Energiebedarfs der Batterie, wobei statistische Daten relativ zu vorangehenden Veränderungen der Batterie ($B_i$) durch das Ladesystem berücksichtigt werden;
   c) Bestimmen für jede Batterie ($B_i$) eines Referenzwerts für die Energie ($E_i$) die in die Batterie ($B_i$) injiziert werden soll, wobei der Referenzwert ($E_i$) bestimmt wird unter Berücksichtigung der Wahrscheinlichkeitsverteilungen ($f_i$) zur Maximierung, für jede Batterie ($B_i$), der Wahrscheinlichkeit, dass der für die Batterie zugewiesene Referenzwert ($E_i$) größer oder gleich dem effektiven Energiebedarf für die Batterie ist, und so dass die Summe der Referenzwerte ($E_i$) kleiner oder gleich der Gesamtenergiemenge ($E_{source}$) ist, die durch das Ladesystem während der Zeitperiode geliefert werden kann;
   d) Aufbauen eines Zeitplans für das Laden der Batterien ($B_i$) unter Berücksichtigung der Referenzwerte ($E_i$); und
   e) Steuern des Ladens der Batterien ($B_i$) gemäß dem Zeitplan,

   wobei bei Schritt c) die Referenzwerte ($E_i$) durch binäre Suche der Wahrscheinlichkeit bestimmt werden.

2. Verfahren gemäß Anspruch 1, wobei bei Schritt c) die Referenzwerte ($E_i$) so bestimmt werden, dass die Wahrscheinlichkeit ($\alpha$) für den Referenzwert ($E_i$), der einer Batterie ($B_i$) zugewiesen wird, so dass er größer oder gleich seinem effektiven Energiebedarf ist, der gleiche für sämtliche Batterien ($B_i$) ist.

3. Verfahren gemäß Anspruch 1 oder 2, wobei die binäre Suche die folgenden Schritte aufweist:

   c1) Zuweisen eines beliebigen Werts zu der Wahrscheinlichkeit ($\alpha$);
   c2) Bestimmen, für jede Batterie ($B_i$) aus einer Wahrscheinlichkeitsverteilung ($f_i$) der Batterie, des Referenzwerts ($E_i$) zugehörig zu der Wahrscheinlichkeit ($\alpha$);
   c3) Vergleichen der Summe der Referenzwerte ($E_i$) mit der Gesamtenergiemenge ($E_{source}$) und Aktualisieren des Werts der Wahrscheinlichkeit ($\alpha$) durch Berücksichtigen des Ergebnisses des Vergleichs; und

   Wiederholen der Schritte c2) und c3) bis die Summe der Referenzwerte ($E_i$) in dem Bereich von 0,9 Malen bis einem Mal der Gesamtenergiemenge ($E_{source}$) liegt.

4. Verfahren gemäß Anspruch 1, wobei bei Schritt c) die Referenzwerte ($E_i$) so bestimmt werden, dass für jede Batterie ($B_i$) die Wahrscheinlichkeit ($\alpha_i$) für den Referenzwert, der der Batterie zugewiesen wird, so dass dieser größer oder gleich dem effektiven Energiebedarf der Batterie ist, die Prioritätsreihenfolgen ($k_i$) berücksichtigt, die den unterschiedlichen Batterien zugewiesen sind.

5. Verfahren gemäß Anspruch 4, wobei die binäre Suche die folgenden Schritte aufweist:

   c1') Zuweisen eines beliebigen Wahrscheinlichkeitswerts zu einer Variable ($\alpha'$);
   c2') Bestimmen für jede Batterie ($B_i$) aus der Wahrscheinlichkeitsverteilung ($f_i$) der Batterie, des Referenzwerts ($E_i$) entsprechend dem Wahrscheinlichkeitswert der Variable ($\alpha'$) geteilt durch die Prioritätsreihenfolge ($k_i$), die der Batterie ($B_i$) zugewiesen ist;
   c3') Vergleichen der Summe der Referenzwerte ($E_i$) mit der Gesamtenergiemenge ($E_{source}$) und Aktualisieren des Wahrscheinlichkeitswerts der Variable ($\alpha'$) durch Berücksichtigen des Ergebnisses des Vergleichs; und

   Wiederholen der Schritte c2') und c3') bis die Summe der Referenzwerte ($E_i$) in dem Bereich von 0,9 Mallen bis einem Mal der Gesamtenergiemenge ($E_{source}$) liegt.

6. Verfahren gemäß Anspruch 4 oder 5, wobei bei Schritt c) die Referenzwerte ($E_i$) so bestimmt werden, dass für jede Batterie ($B_i$) die Wahrscheinlichkeit ($\alpha_i$), dass der Referenzwert, der der Batterie zugewiesen ist, größer oder gleich dem effektiven Energiebedarf der Batterie ist, nicht kleiner als ein Schwellenwert ($\alpha_{imin}$) ist, der der Batterie zugewiesen ist.

7. System zum Verwalten der Ladung einer Sammlung von Batterien ($B_i$), die mit Ladestationen (101) eines Ladesystems verbunden sind, das eine Verarbeitungseinheit (107) aufweist, die konfiguriert ist, um das Ladeverwaltungsverfahren gemäß einem der Ansprüche 1 bis 6 zu implementieren.

**Claims**

1. A method of managing, by means of a processing unit (107), the charge of a collection of batteries ($B_i$) connected to charging stations (101) of a charging system, comprising the steps of:

   a) determining the total quantity of energy ($E_{source}$) which may be supplied by the charging system for a charging time period;
   b) determining, for each battery ($B_i$), a probability distribution ($f_i$) of the effective energy need of the battery, taking into account statistic data relative to prior charges of the battery ($B_i$) by the charging system;
   c) determining, for each battery ($B_i$), a reference value for the energy ($E_i$) to be injected into the battery ($B_i$), the reference values ($E_i$) being determined by taking into account the probability distributions ($f_i$) to maximize, for each battery ($B_i$), the probability for the reference value ($E_i$) assigned to the battery to be greater than or equal to the effective energy need of the battery, and so that the sum of the reference values ($E_i$) is smaller than or equal to the total quantity of energy ($E_{source}$) that can be supplied by the charging system during said time period;
   d) establishing a schedule for the charge of the batteries ($B_i$) taking into account said reference values ($E_i$); and
   e) controlling the charge of the batteries ($B_i$) in accordance with the schedule,

   wherein, at step c), the reference values ($E_i$) are determined by binary search of the probability.

2. The method of claim 1, wherein at step c), the reference values ($E_i$) are determined so that the probability ($\alpha$) for the reference value ($E_i$) assigned to a battery ($B_i$) to be greater than or equal to its effective energy need is the same for all the batteries ($B_i$).

3. The method of claim 1 or 2, wherein said binary search comprises the steps of:

   c1) assigning an arbitrary value to said probability ($\alpha$);
   c2) determining, for each battery ($B_i$), from the probability distribution ($f_i$) of the battery, the reference value ($E_i$) corresponding to said probability ($\alpha$);
   c3) comparing the sum of the reference values ($E_i$) with the total quantity of energy ($E_{source}$) and updating the value of said probability ($\alpha$) by taking into account the result of the comparison; and

   repeating steps c2) and c3) until the sum of the reference values ($E_i$) is in the range from 0.9 times to once the total quantity of energy ($E_{source}$).

4. The method of claim 1, wherein, at step c), the reference values ($E_i$) are determined so that, for each battery ($B_i$), the probability ($\alpha_i$) for the reference value assigned to the battery to be greater than or equal to the effective energy need of the battery takes into account priority orders ($k_i$) assigned to the different batteries.

5. The method of claim 4, wherein said binary search comprises the steps of:

   c1') assigning an arbitrary probability value to a variable ($\alpha'$);
   c2') determining, for each battery ($B_i$), from the probability distribution ($f_i$) of the battery, the reference value ($E_i$) corresponding to the probability value of said variable ($\alpha'$) divided by the priority order ($k_i$) assigned to the battery ($B_i$);
   c3') comparing the sum of the reference values ($E_i$) with the total quantity of energy ($E_{source}$) and updating the probability value of said variable ($\alpha'$) by taking into account the result of the comparison; and

   repeating steps c2') and c3') until the sum of the reference values ($E_i$) is in the range from 0.9 times to once the total quantity of energy ($E_{source}$).

6. The method of claim 4 or 5, wherein, at step c), the reference values ($E_i$) are determined so that, for each battery ($B_i$), the probability ($\alpha_i$) for the reference value assigned to the battery to be greater than or equal to the effective energy need of the battery is not smaller than a threshold ($\alpha_{imin}$) assigned to the battery.

7. A system for managing the charge of a collection of batteries (Bi) connected to charging stations (101) of a charging system, comprising a processing unit (107) configured to implement the charge management method of any of claims 1 to 6.

Fig 1

Fig 2

EP 3 221 825 B1

Fig 3B

Fig 3D

Fig 3A

Fig 3C

12

Fig 4

Fig 5

Fig 6

Fig 7

Fig 8

## RÉFÉRENCES CITÉES DANS LA DESCRIPTION

**Documents brevets cités dans la description**

- FR 1461252
- EP 2775586 A
- WO 2011051144 A
- WO 2013014238 A
- WO 2014037356 A